# EUROPEAN PATENT APPLICATION

(11) **EP 4 811 235 A1**
(43) Date of publication of application: **23.09.2026**
(21) Application number: 26159542.5
(22) Date of filing: 19.02.2026
(51) Int. Cl.: G06Q 10/0631, G06Q 10/10

(54) **AUTOMATED WORKFLOW MANAGEMENT SYSTEMS AND AUTOMATED WORKFLOW SERVERS**

(30) Priority: 19.03.2025 JP 2025045806
(71) Applicant: Toshiba TEC Kabushiki Kaisha, Tokyo 141-8562 (JP)
(72) Inventor: Maeda, Tomoki, Tokyo, 141-8562 (JP)
(74) Representative: Bandpay & Greuter

(57) **Abstract**

According to one embodiment, when a monitoring unit detects a cloud trigger event, a management unit of an automated workflow management system transmits, to an execution unit, a workflow corresponding to the cloud trigger event, a permission necessity setting received from an administrator and indicating whether permission is required before executing the workflow, permitter designating information received from the administrator and indicating a permitter who can grant permission, and a cloud workflow execution request indicating the workflow execution request was triggered by the cloud trigger event. The execution unit executes the workflow based on the permission necessity setting and the permitter designating information.

## Description

### FIELD

Embodiments described herein generally relate to automated workflow management systems and workflow servers for such systems.

### BACKGROUND

In the related art, there is an information processing system that pre-registers and then executes workflows. In addition to execution of a workflow by a user operation, it is also possible to execute the workflow automatically via a cloud trigger associated with an account that has been registered in advance with a third-party cloud service. In this context, a cloud trigger is a trigger tied to the occurrence of an event involving the cloud service. That is, the information processing system may monitor the third-party cloud service and then execute a specific workflow upon detecting the triggering event. In some examples, the triggering event may be a file upload to the registered account.

In such a system, when a user who can execute the workflow is setting up the workflow setting parameters, it is possible to restrict the execution of the workflow to a logged-in user or otherwise. The execution of the workflow by the user operation can be restricted to a logged-in user by referring to current login user information.

However, when the workflow is to be executed via a cloud trigger, because the user who causes the cloud trigger may be interacting with an account on the third-party cloud service, the information processing system cannot determine whether the triggering user is a user who is authorized to execute the workflow. Therefore, it is not possible to prevent the workflow from being executed by an unauthorized or unintended user who should not be allowed to execute the workflow.

### BRIEF DESCRIPTION OF THE DRAWINGS

FIG. 1 is a block diagram illustrating an example of an overall configuration of a service providing system as an information processing system according to a first embodiment.
FIG. 2 is a block diagram of a workflow management server in a service providing system.
FIG. 3 is a table schematically illustrating an example of user information stored in a management information storage unit of a workflow management server.
FIG. 4 is a table schematically illustrating an example of stored content of workflow information.
FIG. 5 is a table schematically illustrating an example of stored content of cloud trigger information.
FIG. 6 is a block diagram of an administrator terminal and a user terminal in a service providing system.
FIG. 7 is a block diagram of a trigger monitoring server.
FIG. 8 is a block diagram of a workflow execution server.
FIG. 9 is a sequence diagram illustrating a registration processing operation.
FIGs. 10 and 11 are flowcharts illustrating a registration processing operation executed by a processor of a workflow management server.
FIG. 12 is a diagram illustrating an example of a workflow information input screen displayed on an administrator terminal.
FIG. 13 is a diagram illustrating an example of a cloud trigger information input screen.
FIG. 14 is a sequence diagram illustrating a processing operation related to execution of a workflow in a service providing system.
FIG. 15 is a flowchart of a workflow execution preparation processing operation.
FIG. 16 is a flowchart of a workflow execution processing operation executed by a processor of a workflow execution server.
FIG. 17 is a diagram illustrating a workflow execution status confirmation screen displayed on a user terminal.
FIG. 18 is a diagram illustrating an example of a workflow information input screen displayed on an administrator terminal in a service providing system according to a second embodiment.
FIG. 19 is a block diagram illustrating an example of an overall configuration of a service providing system as an information processing system according to a third embodiment.
FIG. 20 is a block diagram of an integrated server.

### DETAILED DESCRIPTION

An automated workflow management system and an automated workflow server according to appended claims configured for avoiding execution of a workflow by an unauthorized user are provided.

In general, according to one embodiment, an automated workflow management system includes a monitoring unit to detect a cloud trigger event that has been registered in advance and involves a use of a cloud service, an execution unit to execute a workflow, and a management unit to track execution of the workflow by the execution unit. The management unit is configured to: receive, from an administrator terminal, a permission setting indicating whether permission to start an execution of the workflow is necessary; store the permission setting in association with workflow; receive, from the administrator terminal, a permitter setting indicating a permitter who can grant the permission to start the execution of the workflow when permission is necessary; store the permitter setting in association with the workflow; and transmit a cloud workflow request for a designated workflow to the execution unit after the monitoring unit detects the cloud trigger event, the permission setting, and the permitter setting corresponding to the designated workflow. The execution unit is configured to: upon receiving the cloud workflow request, execute the designated workflow in accordance with the permission setting and the permitter setting corresponding to the designated workflow; and upon receiving a workflow request that is not initiated by a cloud trigger event, execute a workflow designated in the workflow request without checking the permission setting and the permitter setting corresponding to the workflow.

### First Embodiment

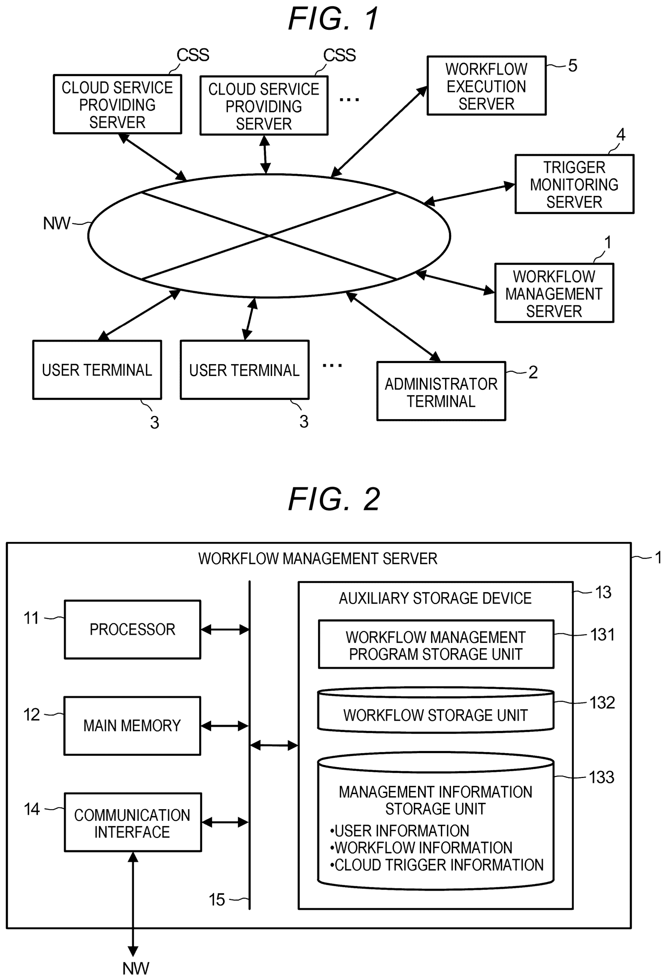

FIG. 1 is a block diagram illustrating an example of an overall configuration of a service providing system according to a first embodiment. In the first embodiment, the service providing system includes a workflow management server 1, at least one administrator terminal 2, a plurality of user terminals 3, a trigger monitoring server 4, and a workflow execution server 5, all of which are connected via a network NW such as the Internet. The service providing system is connected to a plurality of cloud service providing servers CSS, each of which provides a public cloud service, via the network NW. Each cloud service providing server CSS provides cloud storage associated with a user account registered in advance. For example, each cloud service providing server CSS provides a service of storing, in the cloud storage system, any file of any registered user who uses a user terminal 3.

The workflow management server 1 has a function of creating and managing a workflow process in the service providing system. The workflow management server 1 provides, for example, a workflow registration site. The workflow registration site receives settings related to a workflow process to be performed and a cloud trigger setting from the administrator terminal 2 and registers these settings as workflow information and cloud trigger information. The workflow management server 1 transmits a to-be-monitored cloud trigger setting to the trigger monitoring server 4 based on the cloud trigger information, and transmits a workflow execution request to the workflow execution server 5 upon receiving a workflow execution preparation request, corresponding to a cloud trigger, from the trigger monitoring server 4.

The administrator terminal 2 is a terminal operated by a specific administrator such as a dealer, a service technician, or a person in charge of management. The administrator terminal 2 can function as a workflow registration client by interaction with a workflow registration site provided by the workflow management server 1. The administrator terminal 2 sets various parameters (settings) related to a workflow process for creation of a workflow, a cloud trigger to be monitored (to-be-monitored cloud trigger), and selection of a workflow to be executed according to a cloud trigger.

Each of the user terminals 3 is a terminal operated by an end-user or the like. The user terminal 3 can function as a client of the workflow management server 1. The user terminal 3 selects a workflow to be executed and transmits a workflow execution preparation request to the workflow management server 1. The user terminal 3 can function as a workflow execution client of a workflow execution site provided by the workflow execution server 5. The user terminal 3 can check an execution status of the workflow(s) managed by the workflow execution server 5 to see such associated status indications as "in progress", "stopped", or "completed". The user terminal 3 presents a permission request screen or the like to permit a start of a workflow execution by the workflow execution server 5 to the user. The user terminal 3 may then receive user input indicating permission or rejection of the start request by the user then sends the permission request result (e.g., the user's yes/no selection)to the workflow execution server 5.

The trigger monitoring server 4 monitors a cloud storage as notified by the workflow management server 1, and when the trigger monitoring server 4 detects the occurrence of an event that has been pre-registered by the workflow management server 1, the trigger monitoring server 4 transmits an execution preparation request (for the workflow associated with the event) to the workflow management server 1. The workflow management server 1 has a function of receiving the execution preparation request from the trigger monitoring server 4 and transmitting a workflow execution request to the workflow execution server 5 based on the cloud trigger information.

In response to the workflow execution request from the workflow management server 1, the workflow execution server 5 provides a workflow execution site for executing the workflow. When the workflow management server 1 causes the workflow execution server 5 to execute a workflow in response to the workflow execution preparation request from the trigger monitoring server 4, that is, when a workflow is to be executed according to a cloud trigger, the workflow management server 1 transmits, to the workflow execution server 5, a workflow execution request including cloud request information indicating that the workflow has been executed (initiated) via a cloud trigger. In response to the workflow execution request including the cloud request information, the workflow execution server 5 checks with the user terminal 3 regarding the necessity of permission to start execution of the workflow without unconditionally starting execution of the workflow. When it is necessary to specifically permit the start of the workflow execution, the workflow is temporarily put into a stopped state (paused), and a permission request for start of the workflow execution is transmitted to the user terminal 3. In this example, the workflow execution server 5 can start execution of the workflow only after receiving express permission to start execution from the user terminal 3.

Hereinafter, a configuration of each unit of the service providing system will be described.

The workflow management server 1 may be an information processing device such as a server computer. FIG. 2 is a block diagram illustrating an example of a configuration of the workflow management server 1. As illustrated in FIG. 2, the workflow management server 1 includes a processor 11, a main memory 12, an auxiliary storage device 13, a communication interface 14, and the like. These units are connected to each other via a bus line 15 such as a data bus.

The processor 11 is, for example, a central processing unit (CPU), but is not limited thereto. The processor 11 may be a multi-core or multi-threaded processor, and can execute a plurality of types of processing in parallel. The processor 11 may be a micro processing unit (MPU). The processor 11 has a function of controlling operations of the entire workflow management server 1. The processor 11 may include an internal memory, various interfaces, and the like. The processor 11 implements various types of processing by executing a program stored in the internal memory, the auxiliary storage device 13, or the like.

Some of various functions implemented by the processor 11 executing programs may be implemented by various types of additional hardware circuits including integrated circuits such as an application specific integrated circuit (ASIC), a digital signal processor (DSP), a field-programmable gate array (FPGA), a graphics processing unit (GPU), a system on a chip (SoC), and a programmable logic device (PLD). In this case, the processor 11 controls functions executed by the hardware circuits.

The main memory 12 is a volatile memory. The main memory 12 is a working memory or a buffer memory. The main memory 12 can store various application programs based on commands from the processor 11. The main memory 12 may include a temporary storage unit configured to store data required for executing control programs and application programs stored in the auxiliary storage device 13, execution results of the programs, and the like.

The auxiliary storage device 13 is a non-volatile internal storage in which data can be written and rewritten. As the auxiliary storage device 13, for example, an inexpensive storage device having low fault tolerance such as a hard disk drive (HDD), a solid state drive (SSD), or a flash memory is adopted. The auxiliary storage device 13 stores control programs, application programs, various types of data, and the like according to an operation purpose of the workflow management server 1. For example, the auxiliary storage device 13 includes a workflow management program storage unit 131, a workflow storage unit 132, and a management information storage unit 133.

The workflow management program storage unit 131 stores a workflow management program that causes the processor 11 to create a workflow according to an instruction from the administrator terminal 2, set a user as a permitter (person who permits execution) of the workflow, and make settings for the workflow that may be a target of a cloud trigger. For example, according to the workflow management program, an input screen for making various settings or selections can be presented on the administrator terminal 2 and settings can be interactively received by an operation at the administrator terminal 2. In the first embodiment, the cloud trigger is an event in which a file is uploaded to a designated folder of a cloud storage provided by one of the cloud service providing servers CSS.

The workflow storage unit 132 is a storage unit configured to store a plurality of workflows created according to an instruction from the administrator by an operation on the administrator terminal 2.

The management information storage unit 133 stores various types of management information. In this embodiment, the management information storage unit 133 stores, for example, user information, workflow information, and cloud trigger information.

The communication interface 14 is an electronic interface for communicating with the administrator terminal 2, the user terminal 3, the trigger monitoring server 4, and the workflow execution server 5, or other external devices on the network NW.

The workflow management server 1 may include additional configurations or components in addition to those illustrated in FIG. 2. For example, the workflow management server 1 may include a reader device to read information from a recording medium storing various types of information such as programs and data. The programs stored in the recording medium may include the workflow management program.

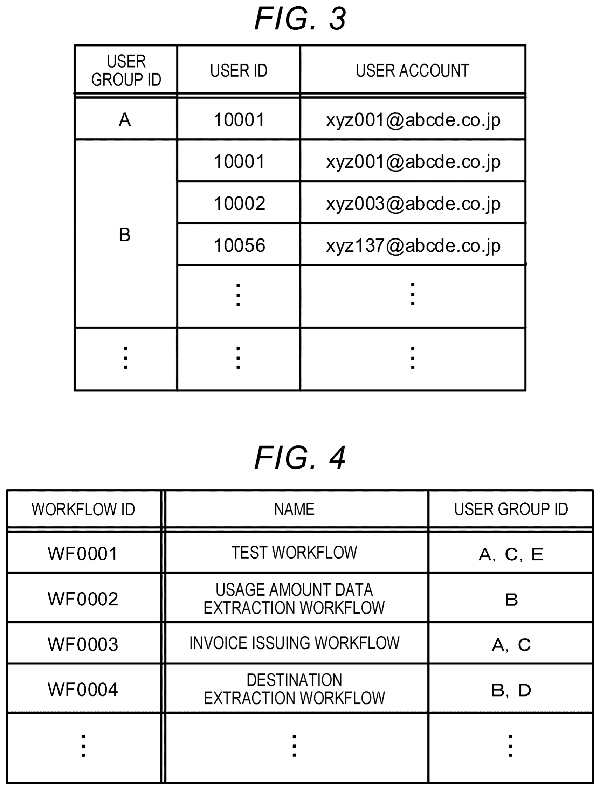

FIG. 3 is a table schematically illustrating an example of the user information stored in the management information storage unit 133 of the workflow management server 1. The user information includes user group information in addition to specific user detailed information such as a user account, a password, and charging (payment) information for all users of the service providing system. The user group information permits grouping of individual users into larger groups (e.g., a company, a section, or a division). The larger groups, and membership therein, may be set by operations on the administrator terminal 2 by the administrator. In general, the administrator can create a group based on any arbitrary rule or basis such as a user's job title, a social group, a job function, age demographic, a geographic address, a gender, or a user preference grouping. The administrator can sort users of the service providing system into the groups. A plurality of users may be included in one group, or a group may consist of only one user. A user may also be included in a plurality of groups in some cases. As illustrated in FIG. 3, each user group entry (user group ID) may be associated with a user ID, which is associated with a user account. The user group ID is a unique user group identification information (ID). The user account is a user account set for the service system. The user account may be used as access information for or on a user terminal 3. For example, the user account may be an email address of a user who uses the user terminal 3.

FIG. 4 is a table schematically illustrating an example of the workflow information stored in the management information storage unit 133 of the workflow management server 1. The workflow information is information indicating which users can use the corresponding workflow (workflow ID). For example, as illustrated in FIG. 4, the workflow information may have a storage format in which a workflow name and a user group ID are stored in association with a workflow ID. The workflow ID is unique information for identifying a particular workflow.

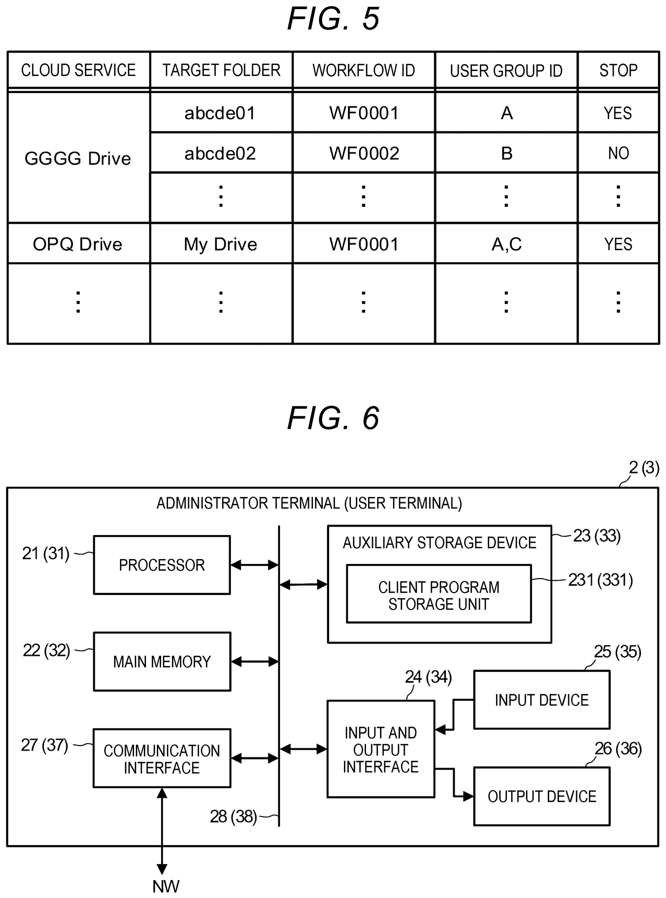

FIG. 5 is a table schematically illustrating an example of the cloud trigger information stored in the management information storage unit 133 of the workflow management server 1. The cloud trigger information relates to settings for a cloud trigger. The settings may be designated at the time of registering the cloud trigger. For example, as illustrated in FIG. 5, the cloud trigger information may have a storage format in which a cloud service designation (e.g., "GGGG Drive" or "OPQ Drive") is associated with one or more target folders, workflow IDs, and user group IDs, with "stop information". In this context, the cloud service designation is for a public cloud service provided by a cloud service providing server CSS. The target folder is a folder of the public cloud service to be monitored for a triggering event. Each folder of the public cloud service is generally associated with a particular account of the public cloud service. Thus, the monitoring target folder (monitored "target folder") can be considered as a monitored account of the public cloud service. The workflow ID entry indicates a workflow to be executed after detection of a trigger event. For example, in this first embodiment, a file upload to a monitored target folder is a trigger event. The user group ID entry indicates a user group or groups from which a group member can confirm the execution status of the triggered workflow to permit the start of the workflow execution. The user IDs associated with the listed user group ID(s) in the cloud trigger information is an example of permitter information. The stop information is information indicating whether it is essential to put the workflow into a stopped (paused) state until execution of the workflow is confirmed/permitted after a cloud trigger event. The stop information is an example of permission necessity information.

The administrator terminal 2 may be an information processing device such as a personal computer. FIG. 6 is a block diagram illustrating an example of a configuration of the administrator terminal 2. As illustrated in FIG. 6, the administrator terminal 2 includes a processor 21, a main memory 22, an auxiliary storage device 23, an input and output interface 24, an input device 25, an output device 26, a communication interface 27, and the like. The processor 21, the main memory 22, the auxiliary storage device 23, the input and output interface 24, and the communication interface 27 are connected to each other via a bus line 28 such as a data bus. The input device 25 and the output device 26 are connected to the input and output interface 24. The administrator terminal 2 may include additional configuration or components in addition to that illustrated in FIG. 6, or some aspects may be excluded from that illustrated in FIG. 6.

The processor 21 is, for example, a CPU, but is not limited thereto. The processor 21 may be a multi-core or multi-threaded processor, and can execute a plurality of types of processing in parallel. The processor 21 may be an MPU. The processor 21 has a function of controlling operations of the entire administrator terminal 2. The processor 21 may include an internal memory, various interfaces, and the like. The processor 21 implements various types of processing by executing a program stored in the internal memory, the auxiliary storage device 23, or the like. Some of various functions implemented by the processor 21 executing programs may be implemented by various types of hardware circuits including integrated circuits such as an ASIC, a DSP, an FPGA, a GPU, an SoC, and a PLD. In this case, the processor 21 controls functions executed by the hardware circuits.

The main memory 22 is a volatile memory. The main memory 22 is a working memory. The main memory 22 can store various application programs based on commands from the processor 21. The main memory 22 can store data required for executing a control program and an application program stored in the auxiliary storage device 23, execution results of the programs, and the like.

The auxiliary storage device 23 is a non-volatile internal storage in which data can be written and rewritten. The auxiliary storage device 23 stores control program, application program, various types of data, and the like according to an operation purpose of the administrator terminal 2. For example, the auxiliary storage device 23 includes a client program storage unit 231.

The client program storage unit 231 stores a client program that causes the processor 21 to function as a client of the workflow management server 1 and cause the workflow management server 1 to create a workflow. For example, when the workflow management program of the workflow management server 1 is a program that provides a predetermined creation screen for workflow creation as a web page, the client program may be a program that provides a web browser.

The input and output interface 24 is an interface for connecting to the input device 25 and the output device 26. The input device 25 is used by the administrator to input instructions and information required for the operation of the administrator terminal 2. The input device 25 includes, for example, a keyboard and a pointing device such as a mouse or a touchpad. The input device 25 may include a touch panel, operation buttons, and the like arranged on a display screen of the output device 26. The input device 25 may include a reader device configured to read information from a recording medium storing various types of information such as programs and data. The output device 26 includes a display configured to display various types of information generated by the administrator terminal 2, such as a liquid crystal monitor, an organic electroluminescence (EL) monitor, a projector screen, or a head-mounted display. The output device 26 may include a speaker configured to transmit various types of information to the administrator by sound. Further, the output device 26 may include a writer device configured to write information generated by the administrator terminal 2 to a recording medium.

The communication interface 27 is an interface for communicating with the workflow management server 1, which is an external device on the network NW.

Similarly to the administrator terminal 2, the user terminal 3 may be an information processing device such as a personal computer. That is, the user terminal 3 may have generally the same configuration as the administrator terminal 2. This similarity is shown by inclusion of corresponding hardware reference symbols in parentheses in FIG. 6. The difference between administrator terminal 2 and user terminal 3 may correspond to simply changing the operator from an administrator to a user. The user terminal 3 includes a processor 31, a main memory 32, an auxiliary storage device 33, an input and output interface 34, an input device 35, an output device 36, a communication interface 37, a bus line 38, and the like. In the user terminal 3, the auxiliary storage device 33 includes a client program storage unit 331.

A client program stored in the client program storage unit 331 causes the processor 31 to function as a client of the workflow management server 1. The processor 31 thus receives a user's selection of a workflow to be executed and transmits a workflow execution preparation request to the workflow management server 1. Further, the client program causes the processor 31 to function as a client of the workflow execution server 5 and to permit confirmation of an execution status (such as "in progress", "stopped", or "completed") of a workflow managed by the workflow execution server 5 and/or to input of execution permission in response to a permission request for starting workflow execution received from the workflow execution server 5. The client program of the user terminal 3 may also use a web browser as a user interface.

In some examples, user terminal 3 may be an image forming apparatus, such as a multi-function peripheral (MFP), having a scanner function, a printer function, a copy function, a network communication function, a facsimile communication function, and the like. In this case, the user terminal 3 further includes a scanner, a printer, and the like. The scanner scans a paper document to acquire an image file. The image file can be stored in the auxiliary storage device 33, read from another user terminal 3 via the network NW, or transmitted to the workflow management server 1 via the network NW as a document file to be processed. The printer forms an image on a recording medium, such as printing paper, based on print information. The print information can be supplied from another user terminal 3 via the network NW. The print information may be an image of a paper document acquired by the scanner, and in this case, the user terminal 3 as an MFP creates a copy of the paper document.

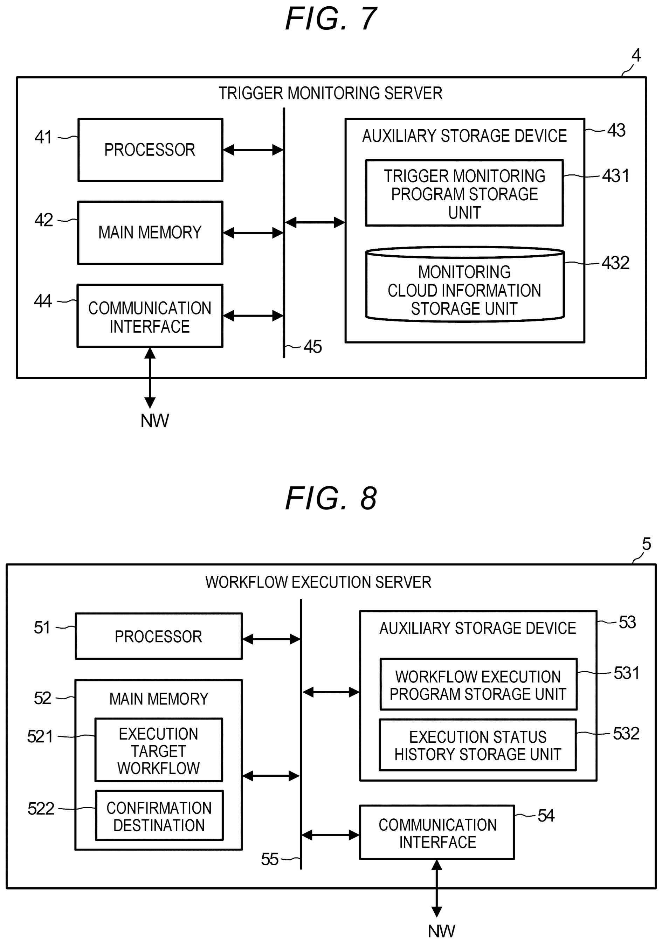

Similarly to the workflow management server 1, the trigger monitoring server 4 may be an information processing device such as a server computer. FIG. 7 is a block diagram illustrating an example of a configuration of the trigger monitoring server 4. As illustrated in FIG. 7, the trigger monitoring server 4 includes a processor 41, a main memory 42, an auxiliary storage device 43, a communication interface 44, and the like. The processor 41, the main memory 42, the auxiliary storage device 43, and the communication interface 44 are connected to each other via a bus line 45 such as a data bus. The auxiliary storage device 43 includes a trigger monitoring program storage unit 431 and a monitoring cloud information storage unit 432. The trigger monitoring server 4 may include additional configuration or components from that illustrated in FIG. 7, or configuration or aspects may be excluded from that illustrated in FIG. 7.

The monitoring cloud information storage unit 432 stores monitoring cloud information transmitted from the workflow management server 1. The monitoring cloud information is information about a monitoring target cloud service account, such as a monitoring target folder of a cloud service.

The trigger monitoring program storage unit 431 stores a trigger monitoring program. The trigger monitoring program causes the processor 41 to store the monitoring cloud information transmitted from the workflow management server 1 in the monitoring cloud information storage unit 432. The trigger monitoring program causes the processor 41 to monitor the monitoring target folder indicated by the monitoring cloud information. Further, the trigger monitoring program causes the processor 41 to transmit a workflow execution preparation request to the workflow management server 1 upon detection of a cloud trigger event in the monitoring target folder.

Similarly to the workflow management server 1, the workflow execution server 5 may be an information processing device such as a server computer. FIG. 8 is a block diagram illustrating an example of a configuration of the workflow execution server 5. As illustrated in FIG. 8, the workflow execution server 5 includes a processor 51, a main memory 52, an auxiliary storage device 53, a communication interface 54, and the like. The processor 51, the main memory 52, the auxiliary storage device 53, and the communication interface 54 are connected to each other via a bus line 55 such as a data bus. The main memory 52 stores an execution target workflow 521 and a confirmation destination 522. The auxiliary storage device 53 includes a workflow execution program storage unit 531 and an execution status history storage unit 532. The workflow execution server 5 may include additional configurations or aspects than those illustrated in FIG. 8, or configurations or aspects may be excluded from those illustrated in FIG. 8.

The execution target workflow 521 stored in the main memory 52 is a workflow extracted from the workflow execution request sent from the workflow management server 1. The confirmation destination 522 is account information of each user extracted from the same workflow execution request and included in a user group that receives a permission request to start execution of a workflow and a transmission of an execution status of the workflow.

The workflow execution program storage unit 531 stores a workflow execution program. The workflow execution program causes the processor 51 to extract the execution target workflow 521 and the confirmation destination 522 from the workflow execution request sent from the workflow management server 1 and store the execution target workflow 521 and the confirmation destination 522 in the main memory 52. The workflow execution program causes the processor 51 to execute the execution target workflow 521 and transmit the execution status to the user terminal 3 corresponding the confirmation destination 522. When the workflow execution request includes cloud request information, the workflow execution program causes the processor 51 to temporarily put the execution target workflow 521 into a stopped state, transmit a permission request for the workflow to the user terminal 3 indicated by the confirmation destination 522, and then start the execution of the workflow only upon reception of the permission to start from the user terminal 3.

The execution status history storage unit 532 collects and stores a history of execution statuses of a workflow, such as "in progress", "stopped", and "completed". The history of the execution status also includes confirmation destination user information for a user who can check the execution status of the workflow.

Hereinafter, an operation of the service providing system will be described.

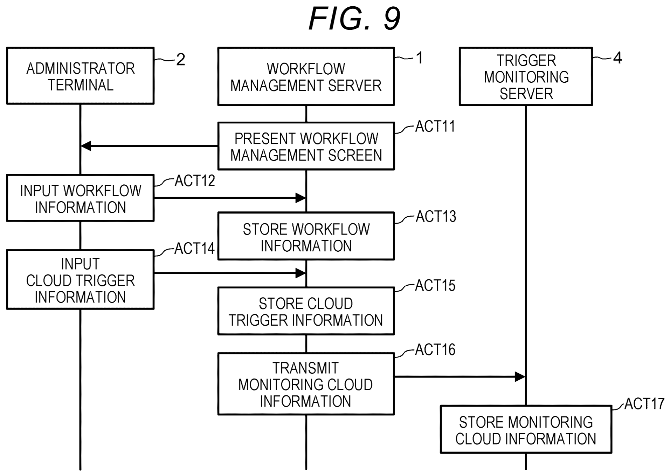

FIG. 9 is a sequence diagram illustrating a registration processing operation in the service providing system. Here, it is assumed that a plurality of workflows are stored in the workflow storage unit 132 of the workflow management server 1 and user information is stored in the management information storage unit 133 according to a previous operation on the administrator terminal 2. In general, a user information registration processing operation and a workflow creation and registration processing operation are the same operations in the related art.

When the administrator of a workflow instructs the workflow management server 1 from the administrator terminal 2 to execute the workflow management program, a predetermined login screen for the workflow management site (provided by the workflow management server 1) is displayed on the administrator terminal 2. Here, the administrator logs in to the workflow management server 1 with his/her own administrator ID via the login screen. After the administrator logs in in this way, the workflow management server 1 transmits a workflow management screen to the administrator terminal 2 to present the workflow management screen on the administrator terminal 2 (ACT11).

By instructing a registration of workflow information via a workflow management screen, the administrator causes the workflow management server 1 to next display a user information input screen on the administrator terminal 2 and then the administrator inputs the necessary workflow information (ACT12). That is, the administrator terminal 2 functions as a workflow registration client and receives registration of the workflow information from the administrator. Specifically, the administrator terminal 2 receives, from the administrator, a selection (designation) of a user group that can execute the workflow, and then transmits a selection result to the workflow management server 1.

The workflow management server 1 stores the workflow information (e.g., the selection of the user group(s) permitted to execute the workflow) in the management information storage unit 133 (ACT13).

The administrator also instructs registration of cloud trigger information via the workflow management screen, which causes the workflow management server 1 to display a cloud trigger information input screen on the administrator terminal 2. The administrator inputs the cloud trigger information (ACT14). That is, the administrator terminal 2, functioning as the workflow registration client, receives registration of the cloud trigger information from the administrator. Specifically, the administrator terminal 2 receives, from the administrator, selection of an account for the monitoring target public cloud service, selection of a workflow to be executed after detection of a trigger event, selection of a user who can confirm an execution status of the workflow, and selection as to whether it is necessary to put the workflow into a stopped state before full execution of the workflow, and transmits these selections to the workflow management server 1. In this example, only a user who can execute the workflow can be selected as a user who can confirm the execution status of the workflow. When the selection of a particular user is not made, then all the users who can execute the workflow are selected.

The workflow management server 1 stores the cloud trigger information in the management information storage unit 133 according to the selection results received from the administrator terminal 2 (ACT15).

Then, the workflow management server 1 creates monitoring cloud information based on the stored cloud trigger information in the management information storage unit 133, and transmits the created monitoring cloud information to the trigger monitoring server 4 (ACT16).

The trigger monitoring server 4 stores, in the monitoring cloud information storage unit 432, the monitoring cloud information that was transmitted from the workflow management server 1 (ACT17).

Hereinafter, the registration processing operation in the workflow management server 1 will be described.

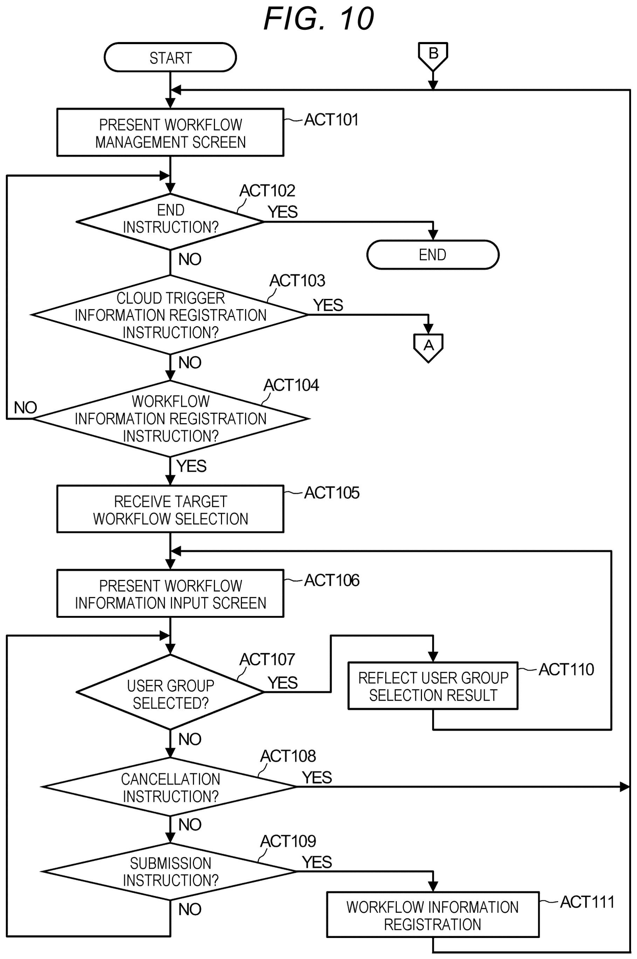

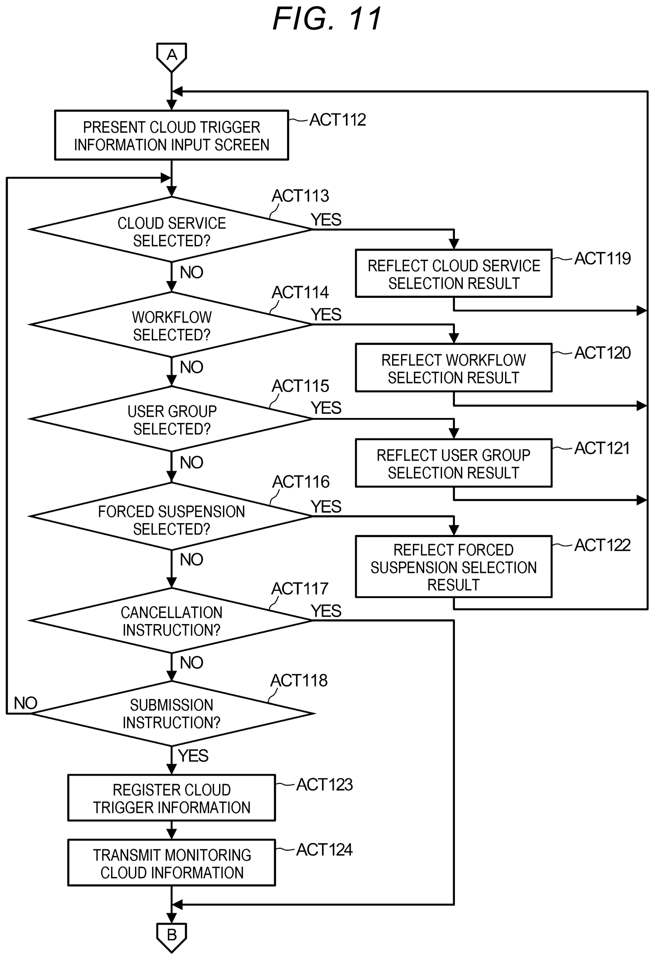

FIGS. 10 and 11 are flowcharts illustrating an example of the registration processing operation executed by the processor 11 of the workflow management server 1. FIGS. 10 and 11 illustrate operations after the login of the administrator using an administrator ID. The processor 11 can perform the registration processing operation by executing a workflow management program stored in the workflow management program storage unit 131 of the auxiliary storage device 13.

In ACT101, the processor 11 presents a workflow management screen on the display, which is an output device 26 of the administrator terminal 2, by transmitting screen data for the workflow management screen to the administrator terminal 2 via the network NW by the communication interface 14.

In ACT102, the processor 11 determines whether an instruction to end the registration processing operation is received from the administrator terminal 2 via the network NW by the communication interface 14. The workflow management screen includes, for example, a workflow information registration button for instructing registration of workflow information, a cloud trigger information registration button for instructing registration of cloud trigger information, and an end button for instructing end of the registration processing operation. When a predetermined input operation such as a click operation of a mouse (an input device 25) at the administrator terminal 2 is performed, a coordinate value indicating an operation position is transmitted from the administrator terminal 2, and the processor 11 acquires the coordinate value via the communication interface 14. Then, the processor 11 can determine whether the acquired coordinate value corresponds to coordinates of the end button on the workflow management screen, thereby determining whether the end instruction is received. If the end instruction is received, the processor 11 determines YES in ACT102 and ends the registration processing operation. If the end instruction has not been received, the processor 11 determines NO in ACT 102 and proceeds to the processing of ACT103.

In ACT103, the processor 11 determines whether the registration instruction for the cloud trigger information is received from the administrator terminal 2 via the network NW by the communication interface 14. The processor 11 can determine whether the registration instruction for the cloud trigger information is received, by determining whether the coordinate value indicating the operation position acquired from the administrator terminal 2 corresponds to coordinates of the cloud trigger information registration button on the workflow management screen. If the registration instruction for the cloud trigger information is received, the processor 11 determines YES in ACT103 and proceeds to the processing of ACT112. If the registration instruction for the cloud trigger information has not been received, the processor 11 determines NO in ACT 103 and proceeds to the processing of ACT 104.

In ACT104, the processor 11 determines whether the registration instruction for the workflow information is received from the administrator terminal 2 via the network NW by the communication interface 14. The processor 11 can determine whether the registration instruction for the workflow information is received, by determining whether the coordinate value indicating the operation position acquired from the administrator terminal 2 corresponds to coordinates of the workflow information registration button on the workflow management screen. If the registration instruction for the workflow information has not been received, the processor 11 determines NO in ACT104 and returns to the processing of ACT102. If the registration instruction for the workflow information is received, the processor 11 determines YES in ACT104 and proceeds to the processing of ACT105.

In ACT105, the processor 11 receives a selection of a registration target workflow for which workflow information is to be registered from the administrator terminal 2 via the network NW by the communication interface 14. For example, the processor 11 transmits screen data for displaying, on the workflow management screen, an option list for selectable workflows, that is, workflows stored in the workflow storage unit 132, and displays the option list on a workflow selection screen presented on the administrator terminal 2. If coordinate information indicating any coordinates of items on the option list is received from the administrator terminal 2, the processor 11 sets the workflow corresponding to the coordinates as a selection result for the registration target workflow.

In ACT106, the processor 11 presents a workflow information input screen on the display of the administrator terminal 2 by transmitting screen data for the workflow information input screen to the administrator terminal 2 via the network NW by the communication interface 14.

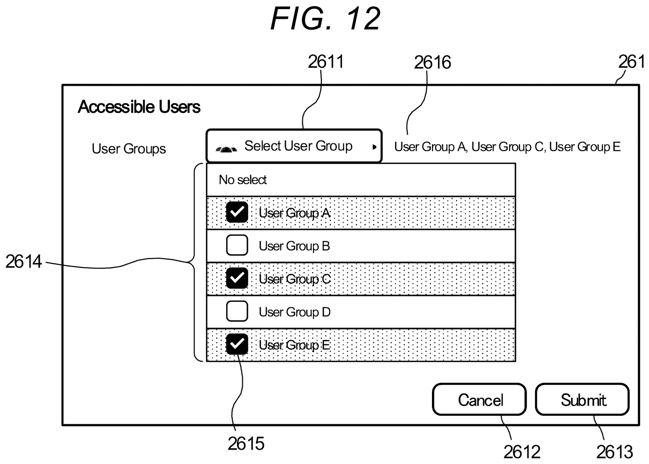

FIG. 12 is a diagram illustrating an example of a workflow information input screen 261 displayed on the output device 26 of the administrator terminal 2. The workflow information input screen 261 is a screen for the administrator to input workflow information for a workflow being registered. As illustrated in FIG. 12, the workflow information input screen 261 includes a user group selection button 2611, a cancellation button 2612, and a submission button 2613.

When the user group selection button 2611 is operated, the processor 11 displays a list of user groups, which are selectable for workflows to be registered, as an option list 2614 based on the user information stored in advance in the management information storage unit 133. In the workflow information input screen 261, the user group selection button 2611 may be a dummy button, and the option list 2614 may be displayed from the beginning regardless of an operation status of the dummy button. In addition to selectable user groups, the option list 2614 also includes "no selection" as one of the options. "No selection" means that all selectable user groups are selected. The list of selectable user groups includes check boxes 2615 to be checked when each user group is selected. The user group for which the check box 2615 is checked, that is, the selected user group is identified and displayed in the option list 2614 and is displayed in a selection status display portion 2616 provided next to the user group selection button 2611.

The cancellation button 2612 is a button operated to cancel the setting content on the workflow information input screen 261.

The submission button 2613 is a button that is operated when submitting the setting content on the workflow information input screen 261 and storing the setting content in the management information storage unit 133 as workflow information.

Referring back to FIG. 10, in ACT107, the processor 11 determines whether a selection instruction for a user group in the option list 2614 is received from the administrator terminal 2 via the network NW by the communication interface 14. That is, the processor 11 acquires a coordinate value of the operation position on the workflow information input screen 261 via the communication interface 14. Then, the processor 11 can determine whether the selection instruction for the user group is received, by determining whether the acquired coordinate value corresponds to coordinates of any check box 2615 or coordinates of "no selection" in the option list 2614 on the workflow information input screen 261. If the selection instruction for the user group is received, the processor 11 determines YES in ACT 107 and proceeds to the processing of ACT 110. If the selection instruction for the user group is not received, the processor 11 determines NO in ACT 107 and proceeds to the processing of ACT 108.

In ACT108, the processor 11 determines whether a cancellation instruction is received from the administrator terminal 2 via the network NW by the communication interface 14. The processor 11 can determine whether the cancellation instruction is received, by determining whether the coordinate value indicating the operation position acquired from the administrator terminal 2 corresponds to coordinates of the cancellation button 2612 on the workflow information input screen 261. If the cancellation instruction is received, the processor 11 determines YES in ACT108 and returns to the processing of ACT 101. If the cancellation instruction is not received, the processor 11 determines NO in ACT108 and proceeds to the processing of ACT109.

In ACT109, the processor 11 determines whether a submission instruction is received from the administrator terminal 2 via the network NW by the communication interface 14. The processor 11 can determine whether the submission instruction is received by determining whether the coordinate value indicating the operation position acquired from the administrator terminal 2 corresponds to coordinates of the submission button 2613 on the workflow information input screen 261. If the submission instruction is received, the processor 11 determines YES in ACT109 and proceeds to the processing of ACT111. If the submission instruction is not received, the processor 11 determines NO in ACT109 and returns to the processing of ACT107.

In ACT110, the processor 11 reflects, in the option list 2614 and the selection status display portion 2616 in the screen data for the workflow information input screen 261, the selection result for the user group indicated by the received selection instruction for the user group. The user group selection indicated by the received selection instruction is held in the main memory 12. Thereafter, the processor 11 proceeds to the processing of ACT 106, transmits the screen data regarding the workflow information input screen 261 reflecting the selection result for the user group to the administrator terminal 2, and presents the workflow information input screen reflecting the selection result on the administrator terminal 2.

In ACT111, the processor 11 registers, in the workflow information stored in the management information storage unit 133, the selection result for the user group held in the main memory 12.

In ACT112, the processor 11 presents the cloud trigger information input screen on output device 26 of the administrator terminal 2 by transmitting screen data for the cloud trigger information input screen to the administrator terminal 2 via the network NW by the communication interface 14.

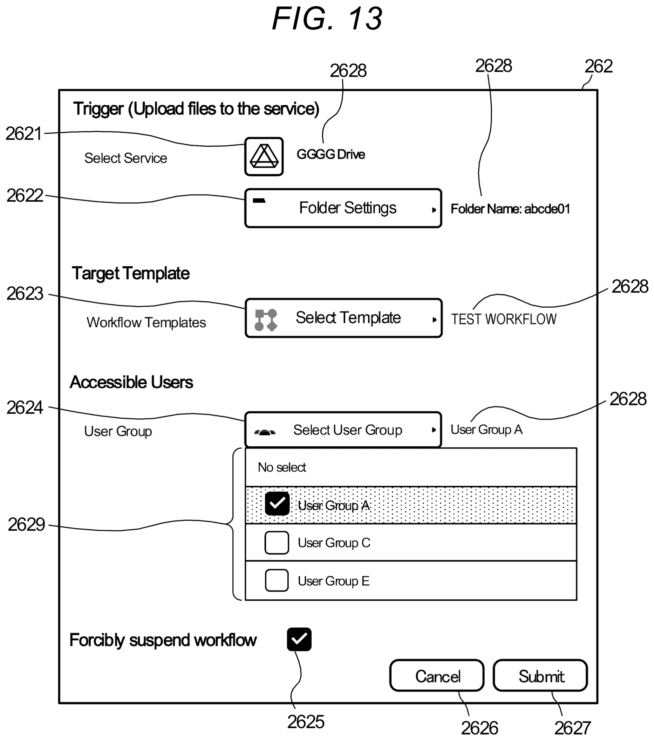

FIG. 13 is a diagram illustrating an example of a cloud trigger information input screen 262 displayed on the administrator terminal 2. As illustrated in FIG. 13, the cloud trigger information input screen 262 includes a monitoring target cloud service selection button 2621, a target folder selection button 2622, a workflow selection button 2623, a confirmation destination user selection button 2624, a forced suspension check box 2625, a cancellation button 2626, and a submission button 2627. The cloud trigger information input screen 262 further includes a selection status display portion 2628, which indicates a selection result, next to each of the monitoring target cloud service selection button 2621, the target folder selection button 2622, the workflow selection button 2623, and the confirmation destination user selection button 2624.

The monitoring target cloud service selection button 2621 is a button for selecting a public cloud service to be monitored for detecting a cloud trigger. When the monitoring target cloud service selection button 2621 is operated, the processor 11 displays a list of accessible cloud services and receives a selection of a monitoring target cloud service (a cloud service to be monitored). When the selection of the monitoring target cloud service ends, the display of the list of accessible cloud services may also end.

The target folder selection button 2622 is a button for selecting a monitoring target folder in the selected monitoring target cloud service. In general, actions related to the target folder may be the cloud trigger when detected. The target folder selection button 2622 may be referred to, or considered, as a button for selecting an account of the monitoring target public cloud service since the folder is generally associated with a particular account. When the target folder selection button 2622 is operated, the processor 11 displays a list of folders registered for the selected monitoring target cloud service, that is, accessible folders, and then receives selection of the monitoring target folder. When the selection of the monitoring target folder ends, the display of the list of accessible folders may also end.

The monitoring target cloud service selection button 2621 and the target folder selection button 2622 can be buttons for selecting an account of the monitoring target public cloud service.

The workflow selection button 2623 is a button for selecting a workflow to be executed when a cloud trigger is detected. When the workflow selection button 2623 is operated, the processor 11 displays a list of workflows stored in the workflow storage unit 132 and then receives a selection of the workflow to be executed upon detection of the cloud trigger. When the selection of the workflow ends, the display of the list of accessible workflows may also end. The workflow selection button 2623 can be considered as a button for selecting a workflow to be executed after detection of a trigger event.

The confirmation destination user selection button 2624 is a button for setting a user as a confirmer or permitter of the workflow. When the confirmation destination user selection button is operated, the processor 11 displays a list of user groups selectable for the selected workflow as an option list 2629. In some examples, the selectable user group may be determined based on the workflow instead of the user information stored in the management information storage unit 133. In other words, the user groups displayed in the option list 2629 may include all user groups (or users) who can use the particular workflow, or may be a specific user group selected when workflow information was first registered. The processor 11 receives a selection of a user from among the specific users or groups on the option list 2629. The display of the option list 2629 may be ended when the selection of the user group ends.

When the workflow execution server 5 is intended to temporarily puts the workflow into a stopped state in response to the workflow execution request including the cloud request information and cause a user terminal 3 to receive a request for permission to start execution of the workflow, the forced suspension check box 2625 is checked. The determination by the processor 11 as to whether the forced suspension check box 2625 is checked determines whether it is essential to put the workflow into a temporarily stopped state after execution of the workflow is triggered.

The cancellation button 2626 is a button operated to cancel the setting content on the cloud trigger information input screen 262.

The submission button 2627 is a button that is operated when storing the setting content in the management information storage unit 133 as the cloud trigger information.

Referring back to FIG. 11, in ACT113, the processor 11 determines whether a cloud service selection instruction is received from the administrator terminal 2 via the network NW by the communication interface 14. The processor 11 can determine whether the cloud service selection instruction is received by determining whether a coordinate value indicating the operation position acquired from the administrator terminal 2 corresponds to coordinates of the monitoring target cloud service selection button 2621 or the target folder selection button 2622 on the cloud trigger information input screen 262. If the cloud service selection instruction is received, the processor 11 determines YES in ACT113 and proceeds to the processing of ACT119. If the cloud service selection instruction is not received, the processor 11 determines NO in ACT113 and proceeds to the processing of ACT114.

In ACT114, the processor 11 determines whether a workflow selection instruction is received from the administrator terminal 2 via the network NW by the communication interface 14. The processor 11 can determine whether the workflow selection instruction is received by determining whether the coordinate value indicating the operation position acquired from the administrator terminal 2 corresponds to coordinates of the workflow selection button 2623 on the cloud trigger information input screen 262. If the workflow selection instruction is received, the processor 11 determines YES in ACT114 and proceeds to the processing of ACT120. If the workflow selection instruction is not received, the processor 11 determines NO in ACT114 and proceeds to the processing of ACT 115.

In ACT115, the processor 11 determines whether a user group selection instruction is received from the administrator terminal 2 via the network NW by the communication interface 14. The processor 11 can determine whether the user group selection instruction is received by determining whether the coordinate value indicating the operation position acquired from the administrator terminal 2 corresponds to coordinates of the confirmation destination user selection button 2624 on the cloud trigger information input screen 262. If the user group selection instruction is received, the processor 11 determines YES in ACT115 and proceeds to the processing of ACT121. If the user group selection instruction is not received, the processor 11 determines NO in ACT115 and proceeds to the processing of ACT116.

In ACT116, the processor 11 determines whether a forced suspension selection instruction is received from the administrator terminal 2 via the network NW by the communication interface 14. The processor 11 can determine whether the forced suspension selection instruction is received by determining whether the coordinate value indicating the operation position acquired from the administrator terminal 2 corresponds to coordinates of the forced suspension check box 2625 on the cloud trigger information input screen 262. If the forced suspension selection instruction is received, the processor 11 determines YES in ACT116 and proceeds to the processing of ACT122. If the forced suspension selection instruction is not received, the processor 11 determines NO in ACT116 and proceeds to the processing of ACT117.

In ACT117, the processor 11 determines whether a cancellation instruction is received from the administrator terminal 2 via the network NW by the communication interface 14. The processor 11 can determine whether the cancellation instruction is received by determining whether the coordinate value indicating the operation position acquired from the administrator terminal 2 corresponds to coordinates of the cancellation button 2626 on the cloud trigger information input screen 262. If the cancellation instruction is received, the processor 11 determines YES in ACT117 and proceeds to the processing of ACT101. If the cancellation instruction is not received, the processor 11 determines NO in ACT117 and proceeds to the processing of ACT118.

In ACT118, the processor 11 determines whether a submission instruction is received from the administrator terminal 2 via the network NW by the communication interface 14. The processor 11 can determine whether the submission instruction is received by determining whether the coordinate value indicating the operation position acquired from the administrator terminal 2 corresponds to coordinates of the submission button 2627 on the cloud trigger information input screen 262. If the submission instruction is received, the processor 11 determines YES in ACT118 and proceeds to the processing of ACT123. If the submission instruction is not received, the processor 11 determines NO in ACT118 and proceeds to the processing of ACT113.

In ACT119, the processor 11 reflects, in the selection status display portion 2628 corresponding to the monitoring target cloud service selection button 2621 or the target folder selection button 2622 in the screen data for the cloud trigger information input screen 262, the selection result for the monitoring target cloud service or monitoring target folder as indicated by the received selection instruction. The selection results for the monitoring target cloud service and the monitoring target folder indicated by the received selection instructions for the monitoring target cloud service and the monitoring target folder are held in the main memory 12. Thereafter, the processor 11 returns to the processing of ACT112, transmits the screen data for the workflow information input screen 261 reflecting the selection result for the monitoring target cloud service or the monitoring target folder in the corresponding selection status display portion 2628 to the administrator terminal 2, and presents the workflow information input screen reflecting the selection result on the administrator terminal 2.

In ACT120, the processor 11 reflects, in the selection status display portion 2628 corresponding to the workflow selection button 2623 in the screen data for the cloud trigger information input screen 262, the selection result for the execution target workflow indicated by the received selection instruction. The selection result for the execution target workflow indicated by the received workflow selection instruction is held in the main memory 12. Thereafter, the processor 11 returns to the processing of ACT112, transmits the screen data for the workflow information input screen 261 reflecting the selection result for the workflow in the corresponding selection status display portion 2628 to the administrator terminal 2, and presents the workflow information input screen reflecting the selection result on the administrator terminal 2.

In ACT121, the processor 11 reflects the selection result for a confirmation destination user group indicated by the received selection instruction in the selection status display portion 2628 corresponding to the confirmation destination user selection button 2624 in the screen data for the cloud trigger information input screen 262. The selection result for the confirmation destination user group indicated by the received user group selection instruction is held in the main memory 12. Thereafter, the processor 11 returns to the processing of ACT112, transmits the screen data for the workflow information input screen 261 reflecting the selection result for the user group in the corresponding selection status display portion 2628 to the administrator terminal 2, and presents the workflow information input screen reflecting the selection result on the administrator terminal 2.

In ACT122, the processor 11 reflects the selection result in the forced suspension check box 2625 in the screen data for the cloud trigger information input screen 262. That is, when the forced suspension check box 2625 is in an unchecked state, the forced suspension check box 2625 is shifted to a checked state, and conversely, when the forced suspension check box 2625 is in the checked state, the forced suspension check box 2625 is shifted to the unchecked state. The checked and unchecked states of the forced suspension check box 2625 are held in the main memory 12. Thereafter, the processor 11 returns to the processing of ACT112, transmits the screen data for the workflow information input screen 261 reflecting the selection instruction in the forced suspension check box 2625 to the administrator terminal 2, and presents the workflow information input screen reflecting the selection result on the administrator terminal 2.

In ACT123, the processor 11 registers, in the cloud trigger information stored in the management information storage unit 133, the selection results in the cloud trigger information input screen 262 held in the main memory 12.

In ACT124, the processor 11 creates monitoring cloud information based on the cloud trigger information registered in the management information storage unit 133, and transmits the monitoring cloud information to the trigger monitoring server 4 via the network NW by the communication interface 14. As described above, the monitoring cloud information indicates information on the monitoring target folder of the monitoring target cloud service, that is, the monitoring target cloud service account. The trigger monitoring server 4 that receives the monitoring cloud information stores the monitoring cloud information in the monitoring cloud information storage unit 432, and monitors the monitoring target cloud service account.

As described above, workflow information and cloud trigger information are stored in the management information storage unit 133 of the workflow management server 1.

Next, a processing operation related to execution of a workflow in the service providing system will be described.

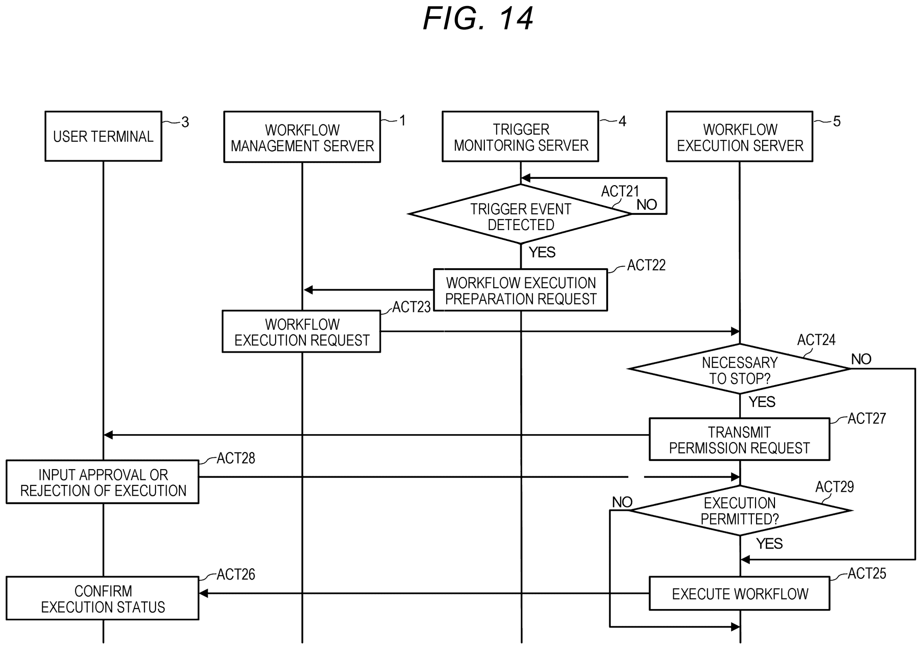

FIG. 14 is a sequence diagram illustrating the processing operation related to execution of a workflow. Since the processing operation related to execution of a workflow in response to a workflow execution preparation request from the user terminal 3 is the same as the processing operation in the related art, a description thereof will be omitted.

The trigger monitoring server 4 monitors the target folder of the target cloud service as indicated by the monitoring cloud information stored in the monitoring cloud information storage unit 432, and waits for detection of a trigger event (ACT21). In other words, the trigger monitoring server 4 monitors the account of the monitoring target public cloud service associated with the cloud trigger, and detects the trigger event when it occurs.

When the trigger event is detected, the trigger monitoring server 4 transmits the workflow execution preparation request to the workflow management server 1 (ACT22). The workflow execution preparation request includes information about the detected cloud trigger.

Upon receiving the workflow execution preparation request from the trigger monitoring server 4, the workflow management server 1 transmits the workflow execution request including the workflow associated with the detected cloud trigger to the workflow execution server 5 (ACT23). The workflow associated with the detected cloud trigger can be acquired from the workflow storage unit 132 based on the cloud trigger information stored in the management information storage unit 133. In a case where the request is a workflow execution request initiated via a cloud trigger, the workflow execution request may include the cloud request information indicating that the request is a workflow execution request initiated via a cloud trigger, permission necessity information indicating whether it is necessary to put the workflow into a stopped state before full execution, and confirmation destination user information (e.g., account information) of a user in a user group that must confirm the execution of the workflow.

Upon receiving the workflow execution request, the workflow execution server 5 determines whether to temporarily stop the execution of the workflow (ACT24). The workflow execution server 5 can make this determination based on the cloud request information and the associated permission necessity information.

If the workflow execution request does not include the cloud request information, the workflow execution request is treated as not being a request initiated via a cloud trigger, and thus the workflow execution server 5 executes the workflow in a standard manner without temporarily stopping the execution of the workflow (ACT25). Even when the workflow execution request includes the cloud request information, if the permission necessity information indicates that confirmation/permission is unnecessary, the workflow execution server 5 may execute the workflow without first temporarily stopping the execution of the workflow for user confirmation (ACT25).

The user terminal 3 of a user in the user group indicated by the confirmation destination user information can access, at any timing, the workflow execution server 5 executing the workflow and monitor the execution status of the workflow (ACT26).

However, when the workflow execution request includes the cloud request information and the permission necessity information indicates that permission is necessary, the workflow execution server 5 temporarily stops (pauses) the execution of the workflow. The workflow execution server 5 then transmits a permission request to the user terminal 3 of the designated user in the workflow execution request, that is, to the user in the confirmation destination user group listed as the permitter (ACT27).

The user terminal 3 that receives the permission request may then access the workflow execution server 5 and receive an input indicating a permission or a rejection of the execution of the workflow (ACT28).

The workflow execution server 5 determines whether execution of the workflow was permitted by the user terminal 3 (ACT29). If the execution of the workflow was permitted, the workflow execution server 5 executes the previously stopped workflow (ACT25). If the designated user group includes a plurality of users, the workflow execution server 5 may start execution of the workflow only if permission is obtained from all of the users in the user group. Alternatively, the execution of the workflow may be started if permission is obtained from any one of the users in the user group. If the execution of the workflow is not permitted, the execution of the workflow may be canceled.

Hereinafter, a workflow execution preparation processing operation in the workflow management server 1 and a workflow execution processing operation in the workflow execution server 5 will be described.

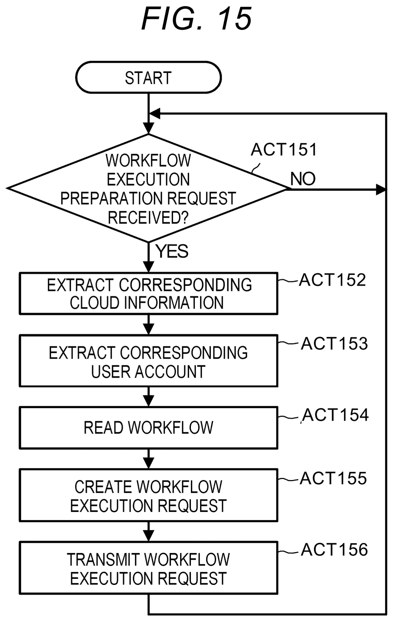

FIG. 15 is a flowchart illustrating an example of the workflow execution preparation processing operation executed by the processor 11 of the workflow management server 1. The processor 11 can execute the workflow execution preparation processing operation by executing the workflow management program stored in the workflow management program storage unit 131 of the auxiliary storage device 13.

In ACT151, the processor 11 determines whether the workflow execution preparation request is received from the trigger monitoring server 4 via the network NW by the communication interface 14. If the workflow execution preparation request is not received, the processor 11 determines NO in ACT151 and repeats the processing of ACT151. If the workflow execution preparation request is received, the processor 11 determines YES in ACT151 and proceeds to the processing of ACT152.

In ACT152, the processor 11 extracts, from cloud information stored in the management information storage unit 133, cloud information associated with a cloud trigger indicated by the received workflow execution preparation request. Specifically, the processor 11 extracts the workflow ID, the user group ID, and the stop information associated with the cloud trigger.

In ACT153, the processor 11 extracts the corresponding user account. Specifically, the processor 11 extracts the user account of each user associated with the extracted user group ID from the user information stored in the management information storage unit 133. The extracted user account serves as the confirmation destination user information indicating the user in the user group that can confirm the execution status of the workflow.

In ACT 154, the processor 11 reads the workflow matching the extracted workflow ID from the workflow storage unit 132.

In ACT155, the processor 11 creates a workflow execution request. The workflow execution request includes the read workflow information, the cloud request information indicating that the request is a workflow execution request initiated via a cloud trigger, the extracted stop information, and the extracted confirmation destination user information.

In ACT 156, the processor 11 transmits the created workflow execution request to the workflow execution server 5 via the network NW by the communication interface 14. Thereafter, the processor 11 returns to the processing of ACT151.

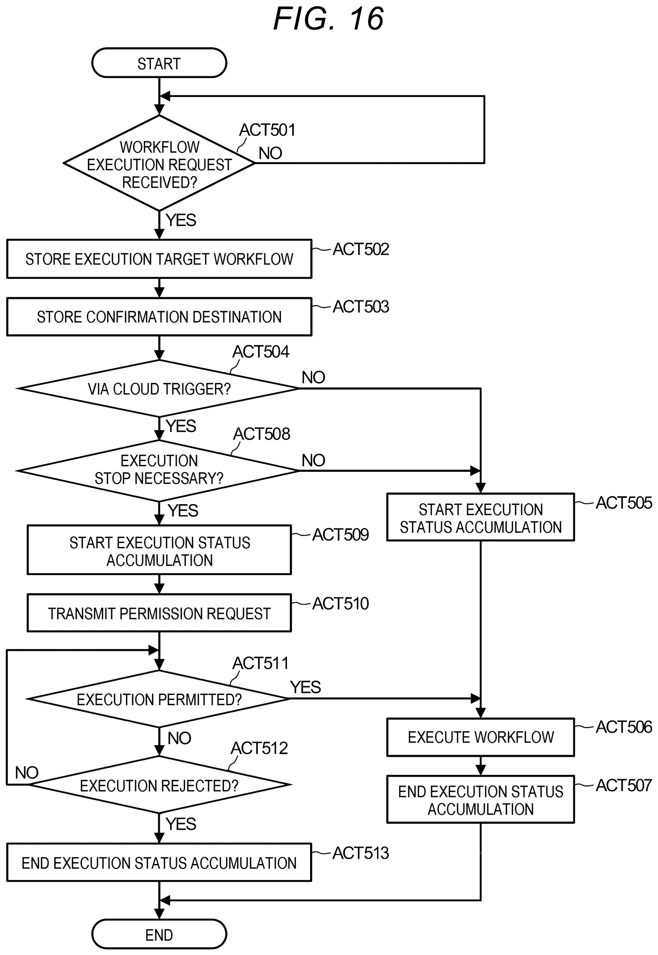

FIG. 16 is a flowchart illustrating an example of the workflow execution processing operation executed by the processor 51 of the workflow execution server 5. The processor 51 can execute the workflow execution processing operation by executing a workflow execution program stored in the workflow execution program storage unit 531 of the auxiliary storage device 53.

In ACT501, the processor 51 determines whether a workflow execution request has been received from the workflow management server 1 via the network NW by the communication interface 54. If the workflow execution request is not received, the processor 51 determines NO in ACT501 and repeats the processing of ACT501. If the workflow execution request is received, the processor 51 determines YES in ACT501 and proceeds to the processing of ACT502.

In ACT502, the processor 51 extracts the workflow information in the workflow execution request and stores the extracted workflow information in the main memory 52 as the execution target workflow 521.

In ACT503, the processor 51 extracts the confirmation destination user information in the workflow execution request and stores the confirmation destination user information in the main memory 52 as the confirmation destination 522.

In ACT504, the processor 51 determines whether the workflow execution request is a request initiated via a cloud trigger. The processor 51 can make the determination by checking whether the workflow execution request includes cloud request information indicating that the request is a workflow execution request initiated via a cloud trigger. If the workflow execution request is not initiated via a cloud trigger, the processor 51 determines NO in ACT504 and proceeds to the processing of ACT505. If the workflow execution request is initiated via a cloud trigger, the processor 51 determines YES in ACT504 and proceeds to the processing of ACT508.

In ACT505, the processor 51 starts collecting and storing, in the execution status history storage unit 532 of the auxiliary storage device 53, an execution status history of the execution target workflow 521 stored in the main memory 52. For example, the processor 51 stores, in history information of the workflow, the account information of the user in the user group indicated by the confirmation destination user information stored as the confirmation destination 522, a start time, and an execution status of "in progress".

In ACT506, the processor 51 executes the execution target workflow 521 stored in the main memory 52. Once the processing defined in the workflow is completed, the processor 51 proceeds to the processing of ACT507.

In ACT507, the processor 51 ends the collection and storage of the execution status history in the execution status history storage unit 532. At this time, the processor 51 stores an end time and an execution status of "completed." Thereafter, the processor 51 ends the workflow execution processing operation illustrated in this flowchart.

Since the execution status history of the workflow is collected and stored in the execution status history storage unit 532, the user who is at confirmation destination for the workflow can access the workflow execution server 5 from the user terminal 3 at any time point and check the execution status of the workflow.

In ACT508, the processor 51 determines whether it is necessary to stop (pause) the execution. When the received workflow execution request is initiated via the cloud trigger, the processor 51 can make the determination based on the permission necessity information included in the workflow execution request which indicates whether it is required to put the workflow into a stopped state prior to full execution to wait for permission to execute fully. If the permission necessity information indicates that permission is necessary, the processor 51 determines that execution stop is necessary. If the execution stop is unnecessary, the processor 51 determines NO in ACT508 and proceeds to the processing of ACT505. If the execution stop is necessary, the processor 51 determines YES in ACT508 and proceeds to the processing of ACT509.

In ACT509, the processor 51 starts collecting and storing, in the execution status history storage unit 532 of the auxiliary storage device 53, the execution status history of the execution target workflow 521 stored in the main memory 52. For example, the processor 51 stores, in the history information of the workflow, the account information of the user in the user group indicated by the confirmation destination user information stored as the confirmation destination 522, the start time, and an execution status of "stopped".

In ACT510, the processor 51 transmits a permission request to the designate user via the network NW by the communication interface 54 based on the user account information indicated in the confirmation destination user information stored as the confirmation destination 522 in the main memory 52. The permission request can be transmitted as an e-mail, for example. The user who receives the permission request can return a response indicating permission or rejection to the workflow execution server 5.

The processing of ACT510 may be optional. This is because, as described above, since the execution status history of the workflow is collected and stored in the execution status history storage unit 532, the user who is the permitter can confirm the execution status of the workflow at any time point. Therefore, when there is a stopped workflow the confirmation may be performed directly rather than in response to a notification transmission or the like. A confirming user who is also a designated permitter can determine whether to execute the workflow and transmit a permission or rejection for the execution to the workflow execution server 5.

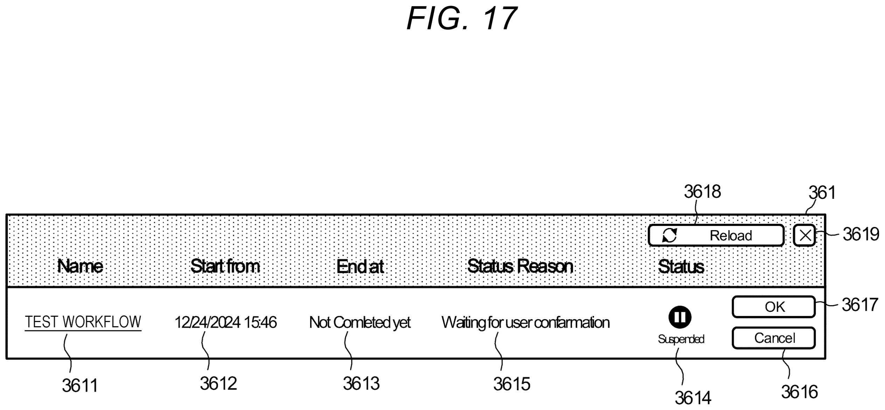

FIG. 17 is a diagram illustrating an example of a workflow execution status confirmation screen 361 displayed on output device 36 of the user terminal 3. The user check the execution status of a workflow at any time on the workflow execution status confirmation screen 361 on the user terminal 3. If there is a confirmation request from the user terminal 3, the processor 51 of the workflow execution server 5 extracts an execution history, in which the user of the user terminal 3 is included in the confirmation destination user information, from the workflow execution status history collected and stored in the execution status history storage unit 532. Then, the processor 51 creates screen data for the workflow execution status confirmation screen 361 based on this content and transmits the screen data to the requesting user terminal 3. Only a user designated in the cloud trigger information as able to confirm the execution status of the workflow can view the execution status of the workflow on the workflow execution status confirmation screen 361.

As illustrated in FIG. 17, the workflow execution status confirmation screen 361 includes a workflow name 3611, a workflow start time 3612, a workflow end time 3613, a workflow execution status 3614, and a status description 3615. FIG. 17 illustrates a workflow whose execution status is "stopped". Therefore, being incomplete is presented in the workflow end time 3613 instead of time, and waiting for user permission is presented in the status description 3615.

The workflow execution status confirmation screen 361 further includes a cancellation button 3616, an OK button 3617, an update button 3618, and an end button 3619. The cancellation button 3616 and the OK button 3617 may be displayed only when the workflow is stopped. The cancellation button 3616 is a button to be operated when rejecting the execution of the stopped workflow, and the OK button 3617 is a button to be operated when permitting the execution of the stopped (paused) workflow. The update button 3618 is a button to be operated when it is desired to update the workflow execution status confirmation screen 361 to the latest state, and the end button 3619 is a button to be operated when ending (closing) the workflow execution status confirmation screen 361.

Referring back to FIG. 16, in ACT511, the processor 51 determines whether execution permission is obtained from the user for a workflow whose execution has been stopped (paused). In this example, the requirement for execution permission may require all designated users to permit the execution of the workflow. In other examples, execution permission from any one of the designated users may be sufficient. If the execution permission is obtained, the processor 51 determines YES in ACT511 and proceeds to the processing of ACT506. If the execution permission is not obtained, the processor 51 determines NO in ACT511 and proceeds to the processing of ACT512.

In ACT512, the processor 51 determines whether the execution has been expressly rejected by a user. If the execution has not yet been expressly rejected, the processor 51 determines NO in ACT512 and returns to the processing of ACT511. If the execution of the workflow is rejected, the processor 51 determines YES in ACT512 and proceeds to the processing of ACT513.

In ACT513, the processor 51 ends the collection and storage of the execution status history in the execution status history storage unit 532. At this time, the processor 51 stores the end time and an execution status indication an execution rejection by the user. Thereafter, the processor 51 ends the workflow execution processing operation illustrated in this flowchart.

As described above, the service providing system according to this embodiment includes the trigger monitoring server 4 configured to detect a cloud trigger (an occurrence of an event registered in advance) related to use of a cloud service or the like, the workflow execution server 5 configured to execute workflows, and the workflow management server 1 configured to manage (track) the execution of the workflows by the workflow execution server 5. In this context, the trigger monitoring server 4 is an example of a monitoring unit, the workflow execution server 5 is an example of an execution unit, and the workflow management server 1 is an example of a management unit. The workflow management server 1 receives, from the administrator terminal 2, a setting notification as to whether permission for the execution of a workflow is necessary. The workflow management server 1 also receives a designation of the permitter(s) required to grant permission for execution of the workflow triggered by a cloud trigger. The workflow management server 1 stores, in the management information storage unit 133, stop information indicating the received content and cloud trigger information including a user group ID. As described above, the stop information is permission necessity information, and the user group ID is an example of designated permitter information. When the trigger monitoring server 4 detects a cloud trigger (triggering event), the workflow management server 1 transmits, to the workflow execution server 5, the workflow designation corresponding to the cloud trigger, the permission necessity information, and the permitter information corresponding to the designated workflow, and a workflow execution request including cloud request information indicating whether the workflow execution request is initiated by a cloud trigger. When the workflow execution request includes the cloud request information, the workflow execution server 5 executes the workflow based on the permission necessity information and the permitter information. When the workflow execution request does not include the cloud request information, the workflow execution server 5 simply executes the workflow.

As described above, by using the cloud request information indicating a workflow execution request was initiated via a cloud trigger, only those workflow executions initiated via a cloud trigger are put into a stopped state to wait for permission to fully execute. Direct workflow executions (that is, those not triggered by a cloud trigger event) need not be put into a stopped state to wait for permission to fully execute. The workflow initiated via the cloud trigger is then fully executed only after receiving execution permission from a designated user (or users). Therefore, according to the embodiment, it is possible to avoid execution of a workflow by a user who is not authorized to execute the workflow.

The workflow management server 1 further receives, from the administrator terminal 2, selection of a candidate permitter when registering a workflow to be executed by the workflow execution server 5, the designation of a cloud-service event for triggering/executing the workflow, and a setting indicating whether execution permission is necessary after the cloud service trigger event is detected.

When one or more users are set as a permitter, the workflow execution server 5 may start execution of the workflow upon receiving permission from all the user or just one of the users, according to administrator preference/setting.

### Second Embodiment

In the first embodiment, when a workflow is to be initiated via a cloud trigger, a setting indicating whether it is essential to put the workflow into a stopped (paused) state to wait for user permission before full execution of the workflow is made when the administrator registers cloud trigger information. However, this setting may be made at another time, such as when registering a workflow to be performed.

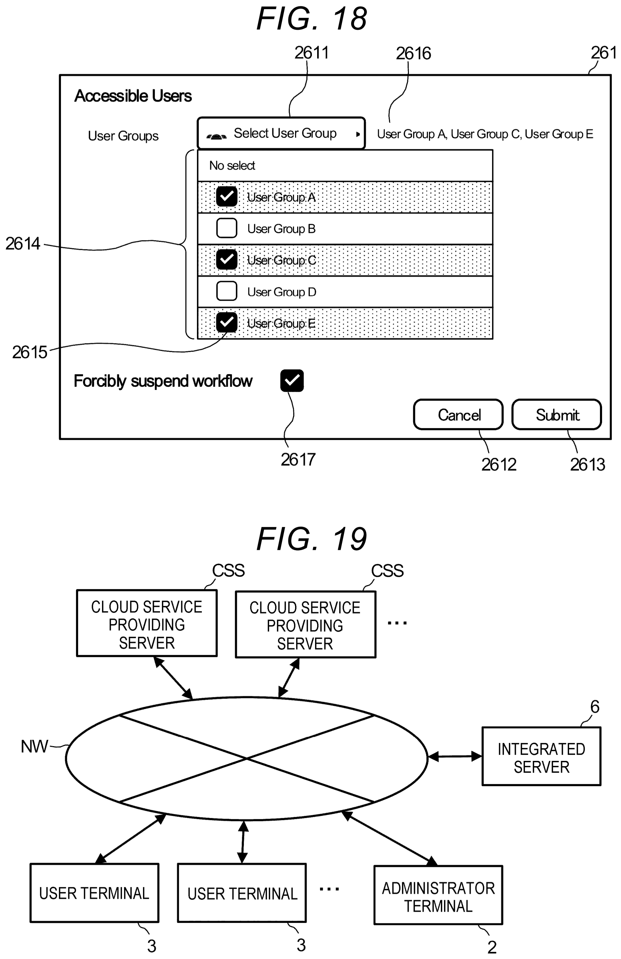

FIG. 18 is a diagram illustrating an example of the workflow information input screen 261 displayed on the administrator terminal 2 in a service providing system according to a second embodiment. In the second embodiment, the workflow information input screen 261 further includes a forced suspension check box 2617 in addition to the workflow information input screen 261 information present in the first embodiment.

The forced suspension check box 2617 is similar to the forced suspension check box 2625 of the cloud trigger information input screen 262 in the first embodiment. Therefore, in the second embodiment, the cloud trigger information input screen 262 does not need to include the forced suspension check box 2625.

By configuring the workflow information input screen 261 in this manner, a setting as to whether it is essential to put the workflow into a stopped state before execution can be made when registering workflow information rather than when setting the cloud trigger information.

In the service providing system according to the second embodiment, substantially similar effects as those of the information processing system according to the first embodiment can be achieved.

According to the second embodiment, the workflow management server 1 receives, from an administrator, a selection of a candidate for a permitter chosen from among all users when registering the workflow information of a workflow to be executed by the workflow execution server 5. The workflow management server 1 also receives registration of cloud service event for triggering the workflow when the cloud service trigger information is being set, and receives a setting indicating whether permission to start execution of the workflow is necessary when receiving the selection of the candidate for the permitter.

Therefore, according to the second embodiment, it is possible to make, at the time of registering the workflow information, a setting as to whether it is essential to put the workflow into a stopped state before execution of the workflow.

### Third Embodiment

Although an above-example depicts separate server devices for the workflow management server 1, the trigger monitoring server 4, and the workflow execution server 5, the described functions of these servers may be implemented by a single, integrated server. This case will be described as a third embodiment. Configurations and operations similar to those of the above embodiments are denoted by the same reference signs as those above, and additional description thereof may be omitted.

FIG. 19 is a block diagram illustrating an example of an overall configuration of a service providing system according to a third embodiment. In the third embodiment, an integrated server 6 (as an information processing apparatus) according to the third embodiment is provided in place of the separate workflow management server 1, trigger monitoring server 4, and workflow execution server 5 shown in FIG. 1.

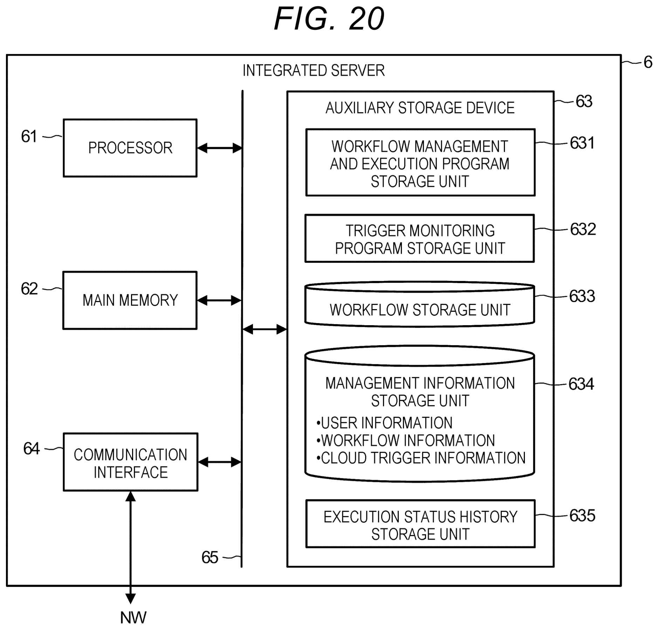

FIG. 20 is a block diagram illustrating an example of a configuration of the integrated server 6. The integrated server 6 may be an information processing device such as a server computer. As illustrated in FIG. 20, the integrated server 6 includes a processor 61, a main memory 62, an auxiliary storage device 63, a communication interface 64, and the like. These units are connected to each other via a bus line 65 such as a data bus. In general, the processor 61, the main memory 62, the auxiliary storage device 63, the communication interface 64, and the bus line 65 are similar to the processor 11, the main memory 12, the auxiliary storage device 13, the communication interface 14, and the bus line 15 of the workflow management server 1 in the first embodiment. The auxiliary storage device 63 stores a control program, an application program, various types of data, and the like as appropriate to the purpose and functions of the integrated server 6. For example, the auxiliary storage device 63 includes a workflow management and execution program storage unit 631, a trigger monitoring program storage unit 632, a workflow storage unit 633, a management information storage unit 634, and an execution status history storage unit 635.

Here, the workflow storage unit 633, the management information storage unit 634, and the execution status history storage unit 635 are similar to the workflow storage unit 132, the management information storage unit 133, and the execution status history storage unit 532 in the first embodiment.

In the third embodiment, a trigger monitoring program stored in the trigger monitoring program storage unit 632 causes the processor 61 to monitor a monitoring target folder based on cloud trigger information stored in the management information storage unit 634. Then, the trigger monitoring program causes the processor 61 to start a processing operation related to workflow execution in a workflow management and execution program in response to detection of a cloud trigger event in the monitoring target folder.

The workflow management and execution program storage unit 631 stores a workflow management and execution program.

As a processing operation related to workflow management, the workflow management and execution program causes the processor 61 to create a workflow according to an instruction from the administrator terminal 2, set a user as a permitter to permits execution of the workflow when paused, and make settings for the workflow that is a triggered by a cloud trigger.

Further, the workflow management and execution program causes the processor 61 to execute the workflow in response to a workflow execution preparation request from a user terminal 3. In response to the detection of the cloud trigger event by the trigger monitoring program, the workflow management and execution program causes the processor 61 to temporarily put the workflow corresponding to the cloud trigger into a stopped state without immediately starting the execution, and to start execution of the workflow upon reception of permission to start the execution from the user terminal 3.

In this manner, the integrated server 6 interacts with the administrator terminal 2 and thus functions as the workflow management server 1 in the first embodiment. The integrated server 6 also interacts the user terminal 3 and thus functions as the workflow management server 1 and the workflow execution server 5 in the first embodiment.

According to the third embodiment, the processor 61 of the integrated server 6 is caused to receive, from an administrator, a setting as to whether permission to start execution of a workflow is necessary before starting execution of the workflow, store permission necessity information indicating setting content in the management information storage unit 133 serving, receive, from the administrator, a setting of a permitter to grant the permission for workflow execution, store permitter information settings in the management information storage unit 133, detect a preset cloud trigger event related to use/operation of a cloud service, then execute the triggered workflow in view of the preset permission requirements and the designated permitter information for the workflow. If execution of the workflow is requested directly (that is, not initiated by detection of a cloud trigger event, but rather by express user request/instruction), the integrated server 6 executes the requested workflow.

Therefore, also in the service providing system according to the third embodiment, substantially the same effects as those described for the first embodiment can be achieved.

In other examples, integrated server 6 implements the functions of the workflow management server 1, the trigger monitoring server 4, and the workflow execution server 5 as were described for the second embodiment. That is, the second and third embodiment may be combined in this manner.

In other examples, the integrated server 6 may implement functions of two of the three servers described in the first or second embodiment, with the remaining server still implemented separately from the integration server 6.

### Other Embodiments

Although certain example embodiments of an information processing system and an information processing apparatus have been described above, the present disclosure is not limited thereto.

For example, the workflow creation function(s) may be separated from the workflow management server 1 and implemented on another server.

The information processing performed by the processor 11 of the workflow management server 1 as described by reference to the accompanying drawings is one example, and the disclosure is not necessarily limited to the specific processing step order therein. The order of the processing steps may be changed or, in some cases, processing steps may be performed in parallel with each other when there is no potential for discrepancy with a preceding or subsequent processing.

Although the cloud trigger has been described in the above examples as an event in which a file is uploaded to a designated folder in a cloud storage, in other examples the cloud trigger may be another event or event type. For example, when setting cloud trigger information, any detectable event involving use, or user interaction with, a cloud service system may be specified as a trigger event.

In the certain embodiments, various control programs are stored in the auxiliary storage device of each server. In other examples, the control program may be transferred separately from each server be being written to a writable storage device provided in the server by an administrator or the like. The transfer of the control program can be performed via a removable non-transitory computer-readable medium or by communication via a network. The non-transitory computer-readable medium may be in any format, such as a CD-ROM or a memory card, as long as the medium can store a program and be read by a device.

While several embodiments have been described, the embodiments have been presented by way of example and are not intended to limit the scope of the disclosure. These novel embodiments can be implemented in various other forms, and various omissions, substitutions, and modifications can be made without departing from the gist of the disclosure. The embodiments are included in the scope of the disclosure, and are included in the scope of the disclosure disclosed in the claims and equivalents thereof.

## Claims

1. An automated workflow management system, comprising:
a monitoring unit (4) to detect a cloud trigger event that has been registered in advance and involves a use of a cloud service;
an execution unit (5) to execute a workflow; and
a management unit (1) to track execution of the workflow by the execution unit, wherein
the management unit is configured to:
receive, from an administrator terminal, a permission setting indicating whether permission to start an execution of the workflow is necessary,
store the permission setting in association with workflow,
receive, from the administrator terminal, a permitter setting indicating a permitter who can grant the permission to start the execution of the workflow when permission is necessary,
store the permitter setting in association with the workflow, and
transmit a cloud workflow request for a designated workflow to the execution unit after the monitoring unit detects the cloud trigger event, the permission setting, and the permitter setting corresponding to the designated workflow, and
the execution unit is configured to:
upon receiving the cloud workflow request, execute the designated workflow in accordance with the permission setting and the permitter setting corresponding to the designated workflow, and
upon receiving a workflow request that is not initiated by a cloud trigger event, execute a workflow designated in the workflow request without checking the permission setting and the permitter setting corresponding to the workflow.

2. The automated workflow management system according to claim 1, wherein the permitter setting is received at the management unit as a selected candidate that has been designated via the administrator terminal from among a group of permitter candidates.

3. The automated workflow management system according to claim 2, wherein the management unit is further configured to permit an operator of the administrator terminal to register the cloud trigger event to be detected by the monitoring unit.

4. The automated workflow management system according to any one of claims 1 to 3, wherein the permitter is a group of people.

5. The automated workflow management system according to claim 4, wherein when the permitter is a group of people, the execution unit is configured to execute the designated workflow only after permission from all of the people in the group is received.

6. The automated workflow management system according to claim 4, wherein when the permitter is a group of people, the execution unit is configured to execute the designated workflow when any one of the people in the group provides permission.

7. The automated workflow management system according to any one of claims 1 to 6, wherein the cloud trigger event is an upload of a file to a particular folder of a cloud-based storage provided by the cloud service.

8. The automated workflow management system according to any one of claims 1 to 7,
wherein the management unit comprises a communication interface connected to the administrator terminal and a storage unit, and the management unit stores, in the storage unit, the permission setting and the permitter setting in association with the workflow.

9. The automated workflow management system according to any one of claims 1 to 8,
wherein, when the permission setting indicates that permission to start execution of the workflow is necessary, the execution unit does not start execution of the workflow until the permission to start execution is granted in accordance with the permitter setting.

10. The automated workflow management system according to any one of claims 1 to 9,
wherein the execution unit transmits a notification requesting the permission to start execution of the workflow to a user terminal associated with the permitter setting.

11. The automated workflow management system according to any one of claims 1 to 10, wherein the monitoring unit, the execution unit, and the management unit are integrated in an integrated server device.

12. The automated workflow management system according to any one of claims 1 to 11, wherein
the monitoring unit is a first server device,
the execution unit is a second server device,
the management unit is a third server device, and
the first, second, and third server devices are connected across a network.

13. An automated workflow management method comprising the following steps:
detecting, by a monitoring unit, a cloud trigger event that has been registered in advance and involves a use of a cloud service;
receiving, by a management unit, from an administrator terminal, a permission setting indicating whether permission to start an execution of a workflow is necessary;
storing, by the management unit, the permission setting in association with the workflow;
receiving, by the management unit, from the administrator terminal, a permitter setting indicating a permitter who can grant the permission to start the execution of the workflow when permission is necessary;
storing, by the management unit, the permitter setting in association with the workflow;
transmitting, by the management unit, a cloud workflow request for a designated workflow to an execution unit after the monitoring unit detects the cloud trigger event, together with the permission setting and the permitter setting corresponding to the designated workflow;
upon the execution unit receiving the cloud workflow request, executing the designated workflow in accordance with the permission setting and the permitter setting corresponding to the designated workflow; and
upon the execution unit receiving a workflow request that is not initiated by a cloud trigger event, executing a workflow designated in the workflow request without checking the permission setting and the permitter setting corresponding to the workflow.

14. An automated workflow server for an automated workflow management system according to any one of claims 1 to 10, the server comprising:
the monitoring unit;
the execution unit; and
the management unit .

15. The server according to claim 14, further comprising: a storage unit; and
a communication interface connected to the administrator terminal.
